# EUROPEAN PATENT APPLICATION

(11) **EP 3 592 096 A1**
(43) Date of publication of application: **08.01.2020**
(21) Application number: 19187296.9
(22) Date of filing: 06.02.2007
(51) Int. Cl.: H04W 74/08

(54) **MOBILE STATION, RADIO ACCESS NETWORK DEVICE, AND RESOURCE REQUEST METHOD**

(30) Priority: 07.02.2006 JP 2006030319
(62) Divisional of application: 07713883.2
(71) Applicant: NTT DOCOMO, INC., Chiyoda-ku Tokyo 100-6150 (JP)
(72) Inventor: Ishii, Minami, Tokyo, 100-6150 (JP); Abeta, Sadayuki, Tokyo, 100-6150 (JP); Nakamura, Takehiro, Tokyo, 100-6150 (JP)
(74) Representative: Hoffmann Eitle

(57) **Abstract**

A mobile station includes an identifier selection unit selecting one identifier among identifiers supplied in advance when the mobile station initiates communications and a connection request signal generation unit generating a connection request signal including the identifier. A radio access network apparatus includes a response signal generation unit, in response to the connection request from the mobile station^ generating a response signal including an identifier assigned by a radio access network system and information indicative of an uplink radio resource assigned for the mobile station and a transmission unit transmitting the response signal to the mobile station transmitting the connection request.

## Description

### TECHNICAL FIELD

The present invention relates to mobile stations, radio access network apparatuses and resource request methods.

### BACKGROUND ART

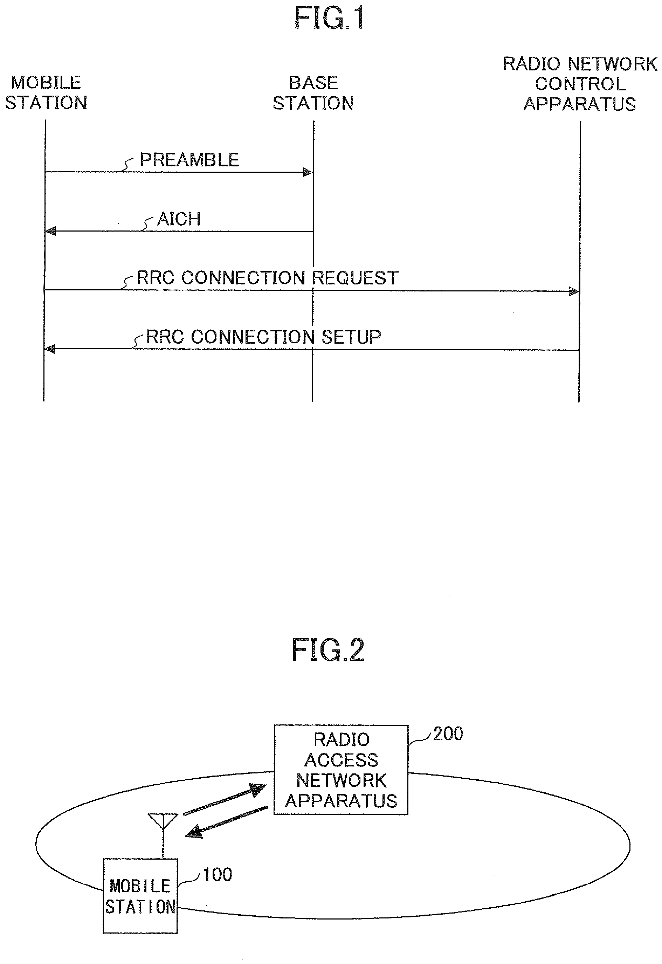

In mobile communication systems such as IMT 2000 communication systems, when a mobile station accesses a mobile communication system under idle state, the mobile station performs operations as shown in FIG. 1. For example, see non-patent documents 1-2.

The mobile station transmits a preamble to a base station apparatus for transmitting a connection request signal.

In response to receipt of the preamble, if the radio base station apparatus accepts the transmission request from the mobile station, it returns an acknowledge in an acquisition indicator channel (AICH).

In response to receipt of the acknowledgement in AICH, the mobile station transmits a connection request signal (RRC) to a radio network control apparatus.

In response to receipt of the connection request signal, the radio network control apparatus assigns a radio resource to the mobile station and transmits a connection setup signal (RRC) for assigning a mobile station identifier.
Non-patent document 1: 3GPP TS25. 331 8. 1. 3
Non-patent document 2: 3GPP TS25. 211 6

### DISCLOSURE OF INVENTION

### [PROBLEM TO BE SOLVED BY THE INVENTION]

However, the above-mentioned prior art has some problems as presented below.

In the above-mentioned scheme, a large number of messages must be exchanged between the mobile station under idle state and the mobile communication system, and it is difficult to shorten the delay from the mobile station requesting the connection to the radio access network apparatus to the beginning of communications.

Thus, one objective of the present invention is to provide a mobile station, a radio access network apparatus and a resource request method that can shorten the delay from the request for the connection to the radio access network apparatus by the mobile station under idle state to the beginning of communications.

### [MEANS FOR SOLVING THE PROBLEM]

In order to overcome the above-mentioned problems, the present invention relates to a mobile station in a mobile communication system including one or more mobile stations and a radio access network apparatus, comprising: an identifier selection unit selecting one identifier among identifiers supplied in advance when the mobile station initiates a communication; and a connection request signal generation unit generating a connection request signal including the identifier.

According to this arrangement, the radio access network apparatus can receive a connection request signal from the mobile station and identify the mobile station based on an identifier included in the connection request signal.

Further, the present invention relates to a radio access network apparatus in a mobile communication system including one or more mobile stations and the radio access network apparatus, comprising: a response signal generation unit, in response to a connection request from a mobile station, generating a response signal including an identifier assigned by a radio access network system and information indicative of an uplink radio resource assigned for the mobile station; and a transmission unit transmitting the response signal to the mobile station transmitting the connection request.

According to this arrangement, even if only a single response signal is transmitted to a mobile station issuing a connection request, an uplink radio resource and a mobile station identifier specific to the mobile station can be assigned.

Still further, the present invention relates to a mobile communication system including one or more mobile stations and a radio access network apparatus, each of the mobile stations comprising: an identifier selection unit selecting one identifier among identifiers supplied in advance when the mobile station initiates a communication; and a connection request signal generation unit generating a connection request signal including the identifier, and the radio access network apparatus comprising: a response signal generation unit, in response to the connection request from the mobile station, generating a response signal including an identifier assigned by a radio access network system and information indicative of an uplink radio resource assigned for the mobile station; and a transmission unit transmitting the response signal to the mobile station transmitting the connection request.

According to this arrangement, when the radio access network apparatus receives a connection request signal from any mobile station, the radio access network apparatus can identify the mobile station based on an identifier included in the connection request signal. Also, the radio access network apparatus can assign an uplink radio resource and a mobile station identifier specific to the mobile station in transmission of only a single response signal to the requesting mobile station.

Still further, the present invention relates to a resource request method for a mobile communication system including one or more mobile stations and a radio access network apparatus, the method comprising the steps of: a mobile station selecting one identifier among identifiers supplied in advance when the mobile station initiates a communication; the mobile station generating a connection request signal including the identifier; the radio access network apparatus, in response to a connection request from the mobile station, generating a response signal including an identifier assigned by a radio access network system and information indicative of an uplink radio resource assigned for the mobile station; and the radio access network apparatus transmitting the response signal to the mobile station transmitting the connection request.

According to this arrangement, when the radio access network apparatus receives a connection request signal from any mobile station, the radio access network apparatus can identify the mobile station based on an identifier included in the connection request signal. Also, the radio access network apparatus can assign an uplink radio resource and a mobile station identifier specific to the mobile station in transmission of only a single response signal to the requesting mobile station.

### [ADVANTAGE OF THE INVENTION]

According to the embodiments of the present invention, a mobile station, a radio access network apparatus and a resource request method capable of shortening delay time for data transmission and reception to and from the mobile station under idle state can be realized.

### BRIEF DESCRIPTION OF DRAWINGS

FIG. 1 is a sequence diagram for a connection request in an IMT 2000 communication system;
FIG. 2 is a block diagram illustrating a mobile communication system according to one embodiment of the present invention;
FIG. 3 is a block diagram illustrating a mobile station according to one embodiment of the present invention;
FIG. 4 is a block diagram illustrating a mobile station according to one embodiment of the present invention;
FIG. 5 is a block diagram illustrating a radio access network apparatus according to one embodiment of the present invention;
FIG. 6 is a configuration diagram for a downlink physical channel according to one embodiment of the present invention;
FIG. 7 is a configuration diagram, for a downlink transmitted packet according to one embodiment of the present invention;
FIG. 8 is a block diagram illustrating a radio access network apparatus according to one embodiment of the present invention; and
FIG. 9 is a sequence diagram for a resource request according to one embodiment of the present invention.

### LIST OF REFERENCE SYMBOLS

- 100:: mobile station
- 200:: radio access network apparatus

### BEST MODE FOR CARRYING OUT THE INVENTION

Hereinafter, the best mode for carrying out the present invention will be described with reference to the drawings and embodiments as presented below. Throughout all the drawings for explanation of the embodiments, the same reference signs are designated for the same functions, and duplicated descriptions thereof are omitted.

A mobile communication system according to one embodiment of the present invention is described with reference to FIG. 2.

In this embodiment, the mobile communication system includes a mobile station 100 and a radio access network apparatus 200.

The mobile station 100 can wirelessly communicate with the radio access network at least in shared data channels.

In the present embodiment, the radio access network apparatus 200 includes some functions of a radio base station and wirelessly communicates to the mobile station 100 directly. In other embodiments, the radio access network apparatus 200 may have no function of the radio base station and use one or more radio base stations to communicate to the mobile station 100 via the radio base stations.

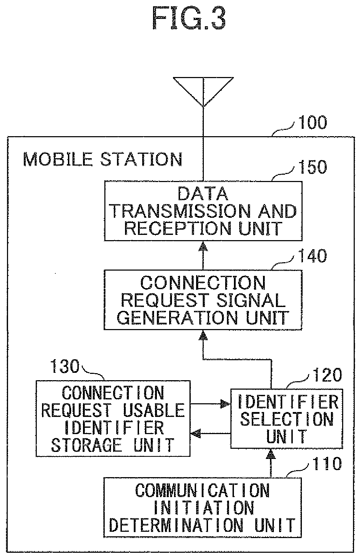

Next, a mobile station 100 according to one embodiment of the present invention is described with reference to FIG. 3.

The mobile station 100 includes a communication initiation determination unit 110, an identifier selection unit 120 coupled to the communication initiation determination unit 110, a connection request usable identifier storage unit 130 coupled to the identifier selection unit 120, a connection request signal generation unit 140 coupled to the identifier selection unit 120, and a data transmission and reception unit 150 coupled to the connection request signal generation unit 140.

The communication initiation determination unit 110 determines whether there is a request for initiating communications. For example, the communication initiation determination unit 110 may make the determination based on whether uplink transmitted data have been generated. Alternatively, the communication initiation determination unit 110 may make the determination based on whether a paging signal has been received. The communication initiation determination unit 110 informs the identifier selection unit 120 that a communication initiation request has been found.

The connection request usable identifier storage unit 130 stores an identifier specified by the radio access network apparatus 200.

In response to the communication initiation request from the communication initiation determination unit 110, the identifier selection unit 120 refers to the connection request usable identifier storage unit 130 and selects an identifier among identifiers stored in the connection request usable identifier storage unit 130. Then, the identifier selection unit 120 supplies the selected identifier to the connection request signal generation unit 140.

The connection request signal generation unit 140 generates a connection request signal including the identifier selected by the identifier selection unit 120.

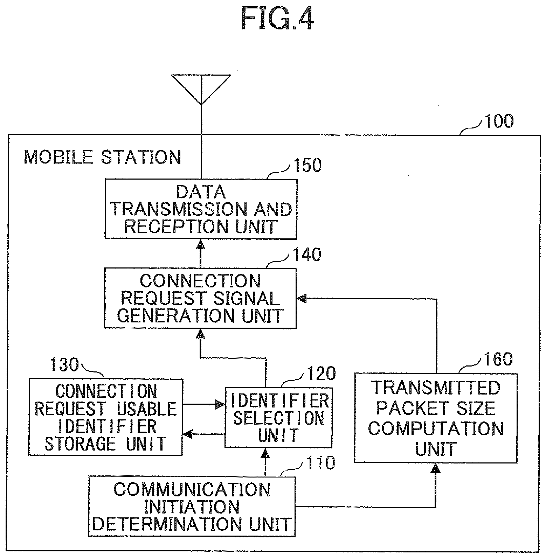

Then, the connection request signal generation unit 140 may include the size of transmitted packets in the connection request signal. In this case, as shown in FIG. 4, the mobile station 100 may include a transmitted packet size computation unit 160 coupled to the communication initiation determination unit 110 and the connection request signal generation unit 110. The communication initiation determination unit 110 informs the transmission packet size computation unit 160 that a communication initiation has been requested. The transmitted packet size computation unit 160 computes the size of packets requested for transmission and supplies the computation result to the connection request signal generation unit 140.

The data transmission and reception unit 150 exchanges signals between the mobile station 100 and the radio access network apparatus 200.

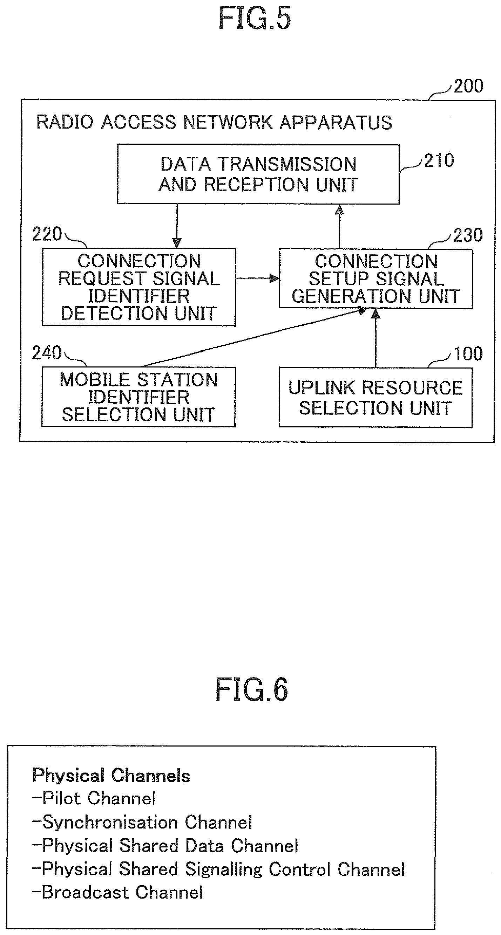

Next, a radio access network apparatus 200 according to one embodiment of the present invention is described with reference to FIG. 5.

The radio access network apparatus 200 includes a data transmission and reception unit 210 serving as transmission means, a connection request signal identifier detection unit 220 coupled to the data transmission and reception unit 210, a connection setup signal generation unit 230 coupled to the connection request signal identifier detection unit 220 and the data transmission and reception unit 210 for serving as response signal generation means, a mobile station identifier selection unit 240 coupled to the connection setup signal generation unit 230, and an uplink resource selection unit 250.

The data transmission and reception unit 210 receives connection request signals and other uplink signals from mobile stations 100. The data transmission and reception unit 210 transmits connection setup signals and other downlink signals to the mobile stations 100.

The connection request signal identifier detection unit 220 detects identifiers included in the connection request signals transmitted from the mobile stations 100 and supplies the detected identifiers to the connection setup signal generation unit 230.

The mobile station identifier selection unit 240 selects identifiers assigned for the mobile stations 100 by the radio access network system and transmits the selected identifiers to the connection setup signal generation unit 230.

The uplink radio resource selection unit 250 selects uplink radio resources for the mobile stations 100 transmitting uplink signals and supplies the selection results to the connection setup signal generation unit 230. For example, the uplink radio resource selection unit 250 may specify at least one of time, code, frequency, a chunk and others as the radio resources.

The connection setup signal generation unit 230 generates connection setup signals for the mobile stations 100 and supplies the generated connection setup signals to the data transmission and reception unit 210. For example, the connection setup signal generation unit 230 includes in the connection setup signals mobile station identifiers used by the mobile stations 100 and information indicative of uplink radio resources.

For example, as shown in FIG. 6, if downlink physical channels consist of pilot channels, synchronization channels, physical shared data channels, physical shared signaling control channels and broadcast channels, the data transmission and reception unit 210 may transmit information indicative of uplink radio resources used by the mobile stations 100 in the downlink shared signaling control channels.

Also, the data transmission and reception unit 210 may transmit the mobile identifiers used by the mobile stations 100 in the downlink shared data channels.

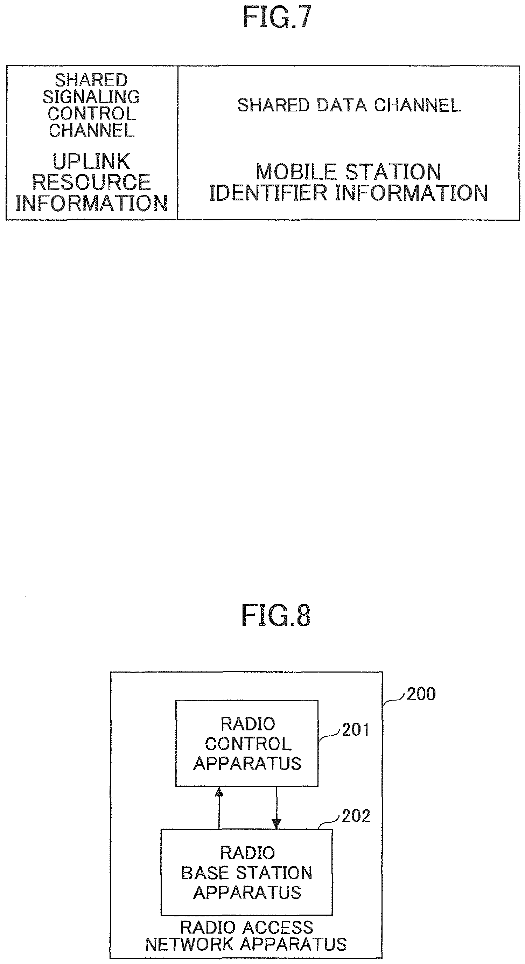

Also, the data transmission and reception unit 210 may include the mobile station identifiers used by the mobile stations 100 and the information indicative of uplink radio resources in the same packet and transmit them as a single packet, as shown in FIG. 7.

Also, a transmitted packet may be made of multiple transmitted symbols, and the mobile station identifier and the information of the uplink radio resource may be assigned for the respective symbols. The identifiers selected by the mobile stations 100 in transmission of connection request signals may be transmitted in the downlink shared signaling control channels.

In other embodiments, the radio access network apparatus 200 may be implemented with a radio control apparatus 201 and a radio base station apparatus 202, as shown in FIG. 8.

In the above-mentioned embodiments, the radio access network apparatus 200 includes both functions of the radio control apparatus 201 and the radio base station apparatus 202. In another embodiment, the radio control apparatus 210 and the radio base station apparatus 202 may be separately provided. From the viewpoint of shorter delay time involved in data transmission, however, the radio control apparatus 210 and the radio base station apparatus 202 may be advantageously accommodated into a single apparatus.

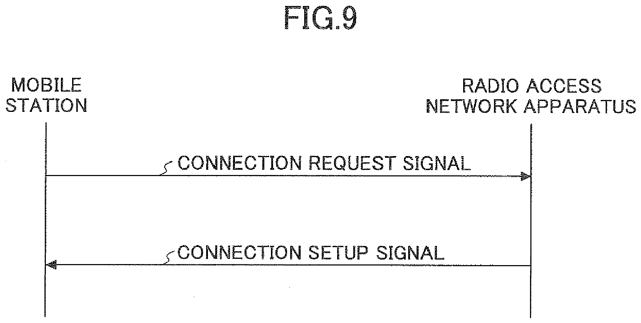

Next, an exemplary connection request sequence in a mobile station under idle state in a mobile communication system according to one embodiment of the present invention is described with reference to FIG. 9.

A connection request signal transmitted from a mobile station 100 is received at the data transmission and reception unit 210 of a radio access network apparatus 200. In response to receipt of the connection request signal, the radio access network apparatus 200 uses the mobile station identifier selection unit 240 to select an identifier assigned for the mobile station 100 transmitting the connection request signal and the uplink resource selection unit 250 to select an uplink resource to be assigned for the mobile station 100. The radio access network apparatus 200 includes the selected uplink resource and mobile station identifier in a connection setup signal and generates the connection setup signal. Then, the radio access network apparatus 200 transmits the generated connection setup signal as a response signal from the data transmission and reception unit 210. The connection setup signal transmitted from the radio access network apparatus 200 is received at the data transmission and reception unit of the mobile station 100.

In this manner, when a mobile station issues a request for connecting to a radio access network system, an available uplink radio resource and an identifier are assigned for the mobile station simultaneously with permission for the connection by the radio access network apparatus. Thereby, it is possible to reduce the number of messages exchanged between the mobile station and the mobile communication system.

According to the above embodiments, the mobile station under idle state can initiate requested communications with less delay time.

This international patent application is based on Japanese Priority Application No. 2006-030319 filed on February 7, 2006, the entire contents of which are hereby incorporated by reference.

### [Industrial Applicability]

A mobile station, a radio access network apparatus and a resource request method according to the present invention can be applied to radio communication systems. Further embodiments of the present invention are described as follows:
E1. A mobile station in a mobile communication system including one or more mobile stations and a radio access network apparatus, comprising:
   an identifier selection unit selecting one identifier among identifiers supplied in advance when the mobile station initiates a communication; and
   a connection request signal generation unit generating a connection request signal including the identifier.
E2. The mobile station as described in E1, further comprising:
   a transmitted packet size computation unit computing a size of a packet requested for transmission,
   wherein the connection request signal generation unit includes information indicative of the computed packet size in the connection request signal.
E3. A radio access network apparatus in a mobile communication system including one or more mobile stations and the radio access network apparatus, comprising:
   a response signal generation unit, in response to a connection request from a mobile station, generating a response signal including an identifier assigned by a radio access network system and information indicative of an uplink radio resource assigned for the mobile station; and
   a transmission unit transmitting the response signal to the mobile station transmitting the connection request.
E4. The radio access network apparatus as described
   in E3, wherein the transmission unit transmits the identifier assigned by the radio access network system in a downlink shared data channel and the identifier assigned by the radio access network system and the information indicative of the uplink radio resource assigned for the mobile station in a downlink shared signaling control channel.
E5. The radio access network apparatus as described
   in E3, wherein the transmission unit transmits the identifier assigned by the radio access network system and the information indicative of the uplink radio resource assigned for the mobile station in a single packet.
E6. A mobile communication system including one or more mobile stations and a radio access network apparatus, each of the mobile stations comprising:
   an identifier selection unit selecting one identifier among identifiers supplied in advance when the mobile station initiates a communication; and
   a connection request signal generation unit generating a connection request signal including the identifier, and
   the radio access network apparatus comprising:
   a response signal generation unit, in response to the connection request from the mobile station, generating a response signal including an identifier assigned by a radio access network system and information indicative of an uplink radio resource assigned for the mobile station; and
   a transmission unit transmitting the response signal to the mobile station transmitting the connection request.
E7. A resource request method for a mobile communication system including one or more mobile stations and a radio access network apparatus, the method comprising the steps of:
   a mobile station selecting one identifier among identifiers supplied in advance when the mobile station initiates a communication;
   the mobile station generating a connection request signal including the identifier;
   the radio access network apparatus, in response to the connection request from the mobile station, generating a response signal including an identifier assigned by the radio access network system and information indicative of an uplink radio resource assigned for the mobile station; and
   the radio access network apparatus transmitting the response signal to the mobile station transmitting the connection request.

## Claims

1. A mobile station (100) in a mobile communication system including one or more mobile stations and a radio access network apparatus (200), comprising:
an identifier storage unit (130) configured to store an identifier for identifying a mobile station, the identifier being supplied by the radio access network apparatus (200);
an identifier selection unit (120) configured to select a first identifier among identifiers stored in the identifier storage unit, the first identifier being selected when the mobile station initiates a communication from an idle state; and
a transmission unit (150) configured to transmit the first identifier selected by the identifier selection unit (120) to the radio access network apparatus (200).

2. A radio access network apparatus (200) in a mobile communication system including one or more mobile stations and the radio access network apparatus, comprising:
a reception unit (210) configured to receive a first identifier from a mobile station, the first identifier being selected when the mobile station initiates a communication from an idle state;
a response signal generation unit configured to generate a response signal including a second identifier to be assigned by a radio access network system for the mobile station (100) and information indicative of an uplink radio resource that the mobile station is allowed to use based on the first identifier received by the reception unit; and
a transmission unit (210) configured to transmit the response signal generated by the response signal generation unit to the mobile station transmitting the first identifier.

3. A mobile communication method in a mobile communication system including one or more mobile stations and a radio access network apparatus (200), comprising:
at a mobile station (100),
storing an identifier for identifying a mobile station, the identifier being supplied by the radio access network apparatus (200);
selecting a first identifier among identifiers stored in the identifier storage unit, the first identifier being selected when the mobile station initiates a communication from an idle state; and
transmitting the first identifier selected by the identifier selection unit (120) to the radio access network apparatus (200).

4. A mobile communication method in a mobile communication system including one or more mobile stations and a radio access network apparatus (200), comprising:
at the radio access network apparatus (200),
receiving a first identifier from a mobile station, the first identifier being selected when the mobile station initiates a communication from an idle state;
generating a response signal including a second identifier to be assigned by a radio access network system for the mobile station (100) and information indicative of an uplink radio resource that the mobile station is allowed to use based on the first identifier; and
transmitting the response signal to the mobile station transmitting the first identifier.
